(19) **Europäisches Patentamt**
**European Patent Office**
**Office européen des brevets**

(11) **EP 3 192 290 B1**

(12) **EUROPEAN PATENT SPECIFICATION**

(45) Date of publication and mention
of the grant of the patent:
**27.05.2020 Bulletin 2020/22**

(21) Application number: **14901696.6**

(22) Date of filing: **11.09.2014**

(51) Int Cl.:
***H04W 4/20*** *(2018.01)*          ***H04W 92/18*** *(2009.01)*

(86) International application number:
**PCT/IB2014/064416**

(87) International publication number:
**WO 2016/038423 (17.03.2016 Gazette 2016/11)**

(54) **COMMUNICATION BETWEEN DEVICES WITHOUT ESTABLISHING A PERSISTENT CONNECTION**

KOMMUNIKATION ZWISCHEN VORRICHTUNGEN OHNE AUFBAU EINER DAUERHAFTE VERBINDUNG

COMMUNICATION ENTRE DISPOSITIFS SANS ÉTABLISSEMENT DE CONNEXION PERSISTANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.07.2017 Bulletin 2017/29**

(73) Proprietor: **Nokia Technologies Oy**
**02610 Espoo (FI)**

(72) Inventor: **KERAI, Kanji**
**London NW9 8AH (GB)**

(74) Representative: **Laine IP Oy**
**Porkkalankatu 24**
**00180 Helsinki (FI)**

(56) References cited:
**WO-A1-2013/175741          US-A1- 2008 109 302**
**US-A1- 2008 112 354          US-A1- 2009 006 846**
**US-A1- 2013 174 252          US-A1- 2014 055 243**

**Description**

This disclosure relates to communications between devices and more particularly to non-persistent communications.

Devices may communicate wirelessly via appropriate apparatus for receiving and transmitting signals. For example, a user may have a communication device such as a smart phone or a laptop and an auxiliary device such as a wearable device connected to each other via a short range link for data communications. The short range link can be provided based on an appropriate short range protocol, for example based on the Bluetooth-protocol. Short range protocols such as the Bluetooth protocol can require the devices to have a persistent connection to be ready for communication of data. To set up a secure persistent connection between the devices, a process known as pairing is needed requiring a user to interact with both devices in a defined sequence of steps. A persistent connection subsequently established can consume considerable amounts of power which typically is not desirable, in particular in portable devices. Persistent connections are also susceptible of connection failures. The user may not even be aware that the persistent connection has failed. US 2013/174252 A1 and US 2014/055243 A1 are considered prior art.

The invention is defined by the appended claims. In accordance with an aspect there is provided a method comprising receiving by a device a first broadcast from a broadcasting device, the first broadcast advertising information identifying the broadcasting device, obtaining security information associated with the broadcasting device based on the received broadcast, authenticating the broadcasting device based on the security information, receiving a second broadcast from the broadcasting device, determining that the broadcasting device is an associated device capable of non-connected communications between the devices, and communicating at least one data packet with the broadcasting device subsequent to the second broadcast without establishing a persistent connection between the devices.

In accordance with another aspect there is provided a method comprising sending by a broadcasting device a first broadcast for advertising information identifying the broadcasting device, receiving from a responding device information identifying the responding device, sending security information calculated based on said information identifying the broadcasting device and security information associated with the broadcasting device to associate the broadcasting device with the responding device, sending by the broadcasting device a second broadcast including said information identifying the responding device to confirm completion of the association with the responding device, and communicating at least one data packet with the responding device subsequent to the second broadcast without establishing a persistent connection between the devices.

In accordance with another aspect there is provided an apparatus for a communication device, the apparatus comprising at least one processor, and at least one memory including computer program code, wherein the at least one memory and the computer program code are configured, with the at least one processor, cause the communication device at least to receive a first broadcast from a broadcasting device, the first broadcast advertising information identifying the broadcasting device, obtain security information associated with the broadcasting device based on the received broadcast, authenticate the broadcasting device based on the security information, receive a second broadcast from the broadcasting device, determine that the broadcasting device is an associated device capable of non-connected communications between the devices, and communicate at least one data packet with the broadcasting device subsequent to the second broadcast without establishing a persistent connection between the devices.

In accordance with yet another aspect there is provided an apparatus for a device, the apparatus comprising at least one processor, and at least one memory including computer program code, wherein the at least one memory and the computer program code are configured, with the at least one processor, cause the device at least to send a first broadcast for advertising information identifying the broadcasting device, receive from a responding device information identifying the responding device, send security information calculated based on said information identifying the broadcasting device and security information associated with the broadcasting device to associate the broadcasting device with the responding device, send by the broadcasting device a second broadcast including said information identifying the responding device to confirm the association with the responding device, and communicate at least one data packet with the responding device subsequent to the second broadcast without establishing a persistent connection between the devices.

In accordance with a more detailed aspect the first broadcast comprises information of at least one of an address, universal resource identifier and the model and/or type of the broadcasting device.

Data may be encrypted based on at least one key computed based on said security information associated with the broadcasting device.

The communicating of at least one data packet may comprise communicating data to the broadcasting device in a connection request packet and/or communicating data from the broadcasting device in a further broadcast packet.

The security information associated with the broadcasting device may comprise at least one key. The security information associated with the broadcasting device may be obtained at the device by downloading the security information from a server based on the first broadcast. In the broadcasting device the information can be fetched from an internal storage of the broadcasting device.

EP 3 192 290 B1

In accordance with one specific embodiment information identifying the device is transmitted to the broadcasting device in response to the first broadcast, a first key is calculated based on the obtained security information and information identifying the broadcasting device, the obtained security information comprising a second key available also for the broadcasting device, a third key is communicated from the broadcasting device, in response to determining a match between the first key and the third key, a fourth key is calculated based on the addresses of the device and the broadcasting device and the second key and a fifth key is calculated based on the fourth key and the address of the device, the fifth key is transmitted to the broadcasting device in a request for connection, a successful security association is determined based on receipt of the second broadcast from the broadcasting device, and data encrypt based on the fourth key is transmitted to the broadcasting device.

In accordance with one specific embodiment information a first key is calculated based on a second key available for the broadcasting device and information identifying the broadcasting device and the first key is sent to the responding device, a third key is calculated based on the addresses of the responding and broadcasting devices and the second key, a fourth key is received from the responding device, a fifth key is calculated based on the third key and the address of the responding device, the fourth and the fifth key are compared and in response to a match, determining a successful security association and providing the second broadcast, where after data encrypt based on the third key is communicated from the responding device.

In accordance with one specific embodiment the first broadcast and/or the second broadcast are periodic. Address information for at least one of the devices may be changed periodically and/or randomly.

At least one of the devices can comprise a mobile device provided with a short range radio for short range communications and radio apparatus for accessing a mobile communication system and at least one other of the devices comprises an auxiliary device provided with a short range radio for short range communications with the mobile device.

Short range radio apparatus of at least one of the devices may be switched between on/off states based on predefined criteria.

A device comprising the described apparatus and arranged to implement the embodiments can also be provided. The device may comprise a communication device, for example a mobile user device. The mobile user devices can be a mobile communication device such as a mobile phone, a smart phone, a personal data assistant, a notebook, a tablet computer or a laptop computer. An auxiliary device can comprise a wearable device such as a smart watch, smart eyeglasses or clothing, decorative items or jewellery, for example rings, bracelets, necklaces and pedants with short range communication and data processing capabilities. A system comprising at least one of such device can also be provided.

A computer program comprising program code adapted to perform the herein described methods may also be provided. In accordance with further embodiments apparatus and/or computer program product that can be embodied on a computer readable medium for providing at least one of the above methods is provided.

It should be appreciated that any feature of any aspect may be combined with any other feature of any other aspect.

Embodiments will now be described in further detail, by way of example only, with reference to the following examples and accompanying drawings, in which:

Figure 1 shows an example of two devices in short range communication with each other,
Figures 2 and 3 are flowchart in accordance with certain examples,
Figures 4 and 5 are signalling flowchart according to certain examples, and
Figures 6 - 11 show examples of data packets for sensing of the various messages of Figures 4 and 5.

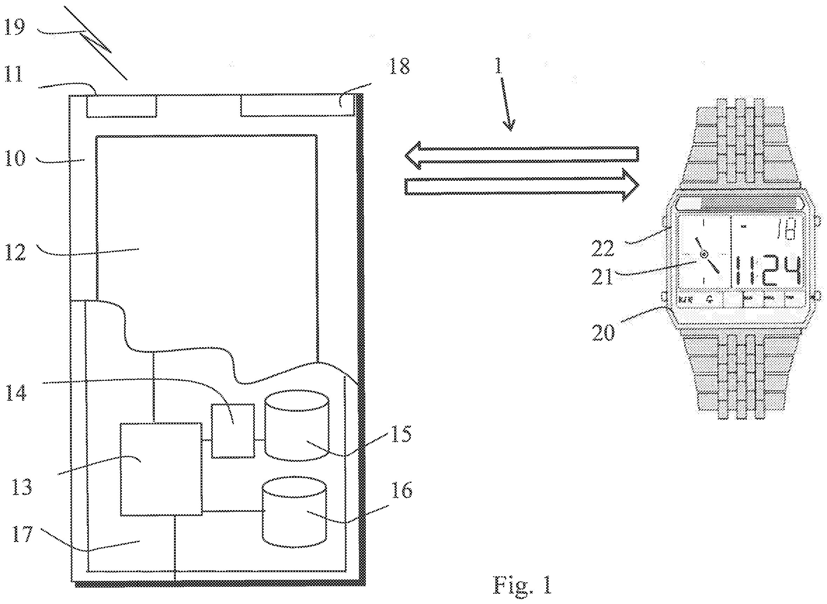

In the following certain illustrative examples for enabling communication between devices in a non-connected mode will be described. Before explaining certain principles and procedures to implement this, a brief explanation of devices that may be used is given with reference to Figure 1.

Figure 1 shows a schematic, partially sectioned view of an exemplifying communication device 10. More particularly, a handheld or otherwise mobile communication device 10 is shown. An appropriate mobile communication device can be provided by any device capable of sending and receiving radio signals 19 by means of radio apparatus 11. Non-limiting examples include a mobile station (MS) such as a mobile phone or what is known as a 'smart phone', a portable computer such as a laptop or a tablet computer provided with a wireless interface card or other wireless interface facility, personal data assistant (PDA) provided with wireless communication capabilities, or any combinations of these or the like.

A user of the communication device 10 may be using at least one auxiliary device also adapted for wireless communications. An example of an auxiliary device is denoted by numeral 20 in Figure 1. It is noted that although this example shows a wearable device in the form a smart watch other types of auxiliary devices adapted for communication via a wireless link are possible, Further non-limiting examples of wireless auxiliary devices include those where a short range radio is integrated with hands-free equipment, ear pieces with wireless connectivity, eyewear and other headgear such as helmets or hats, clothing, jewelry and so on, universal serial bus (USB) sticks with wireless capabilities, modem data cards or any combinations of these or the like. Various other types of auxiliary devices are also already available or have at least been proposed.

A device can be provided with wireless communication capabilities and appropriate electronic control apparatus for enabling operation thereof in accordance with the herein described principles. The mobile device 10 of Figure 1 is shown being provided with at least one data processing entity 13, for example a central processing unit and/or a core processor, at least one memory 15 and other possible components such as additional processors 14 and memories 16 for use in software and hardware aided execution of tasks it is designed to perform. The data processing, storage and other relevant control apparatus can be provided on an appropriate circuit board 17 and/or in chipsets. Data processing and memory functions provided by the control apparatus of the mobile device are configured to cause control and signalling operations in accordance with certain embodiments of the present invention as described later in this description. Device 20 can correspondingly include appropriate data processing and memory capabilities for performing the functions it is designed to provide and to implement the herein described communication functions at the other end of a communications link between devices 10 and 20.

The user may control the operation of the mobile device 10 by means of a suitable user interface such as a control button(s), touch sensitive display screen or pad 12 and/or a key pad, voice commands, combinations of these or the like. A speaker and a microphone are also typically provided. Similarly, the other device 20 can be provided with a display 21 and one or more control buttons 22 and/or other user interface elements, as appropriate depending on the application and features of the device. As shown by Figure 1, it is common that that the "main" communication device 10 has a larger and more sophisticated user interface than what is provided by the typically smaller and otherwise limited auxiliary device 20,

There are various use scenarios where it is desirable for at least two devises of a user to communicate with each other. For example, for a case of a smart phone and a wearable device, e.g. a watch, a user can receive alerts of incoming calls or incoming messages (e.g. short message service (SMS) or multimedia service (MMS) message, emails, alarms, meeting reminders, etc.) on the wearable device. This can be useful in particular when the phone is in a pocket or otherwise out of sight. An auxiliary device may also have a display to show at least a part, e.g. a few characters of the message. A user can also answer/reject an incoming call using the user interface (UI) on the auxiliary device without needing to handle the actual phone unit. For example, answering a call may be done by use of a handsfree headset or a smart watch. User can also set the configuration of the auxiliary device from the phone. For example, information on configurations such as set time, set alarm time, change display mode, etc. may be communicated to the auxiliary device. User can also update the software of the wearable device. In general, the UI on the phone can be used instead of the UI on the wearable device. In addition of the size, better capabilities and more sophisticated functionalities, a user can be more comfortable and familiar in using the UI of the phone than the UI of the auxiliary device.

Devices 10 and 20 may communicate wirelessly over a short range link 1 via appropriate apparatus for receiving and transmitting signals. In Figure 1 the transceiver apparatus of device 10 is designated schematically by block 18. The transceiver may be provided for example by means of a radio part and associated antenna arrangement. The antenna arrangement may be arranged internally or externally to the mobile device. The short range link can be provided based on any appropriate short range protocol. In the example below the link is provided based on the Bluetooth-protocol.

Current short range protocols such as the Bluetooth protocol can require the devices to be in 'connected' mode to be able to be ready for communication of data there between. To set up a secure persistent connection between the devices, a process known as pairing has to be completed first. In pairing a user interacts with both devices to complete the pairing process. For example, in accordance with the Bluetooth protocol this requires the user to turn on a Bluetooth low energy (BLE) radio of the wearable device, perform 'Add a device' procedure on the phone, authenticate the devices by entering passkey and/or comparing passkeys, and save the paired device for future use ('bonding'). The Bluetooth pairing process thus requires the user to interact with both devices in a defined sequence and involves several steps. A user may need to attempt this several times before the pairing completes successfully which can be frustrating. A persistent connection can then be set up between the paired devices on a short range link based on the Bluetooth protocol. A persistent connection can consume considerable amounts of power thus reducing the battery lifetime. This is not desirable in particular in portable / small devices with limited battery capacities. Persistent connections between the devices can also suffer from intermittent connection failures, for example because of radio fading due to movement of the user. If the connection fails, the user has to re-connect the devices. The user may not even be aware that the persistent connection has failed which means the user will not get any alerts on the wearable device.

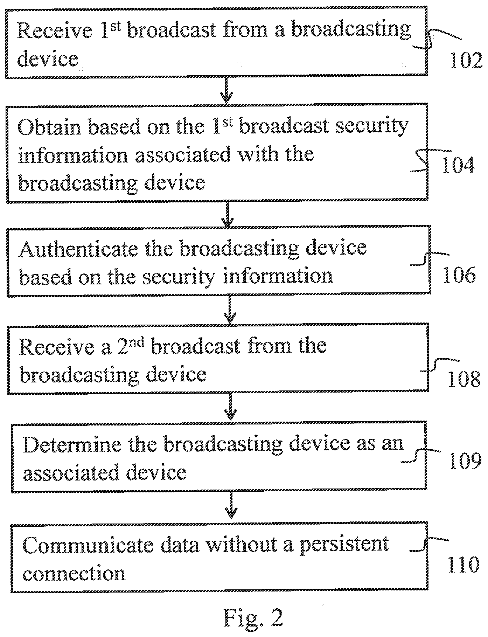

Figure 2 illustrates a flowchart for exchange of messages between a first device and a second device for enabling data communications between the at least two devices over a short range link without the need of a persistent connection. Instead of pairing the devices such that they constantly exchange messages to maintain the pairing and the connection a looser linkage called herein as association is created between the devices. Once the devices are associated data can be exchanged between them at any point without maintaining a persistent connection between the devices where both of the devices need to be involved in a connection. More particularly, a device received a first broadcast at 102 from a broadcasting device, the first broadcast advertising information identifying the broadcasting device. Security information associated with the broadcasting device is then obtained at 104 based on the received broadcast. The broadcasting device is authenticated at 106 based on the security information. A second broadcast is received at 108 from the broadcasting device, and it can be determined at 109 that the broadcasting device is an associated device capable of non-connected communications between the devices. At least one data packet is communicated at 110 with the broadcasting device subsequent to the second broadcast without establishing a persistent connection between the devices.

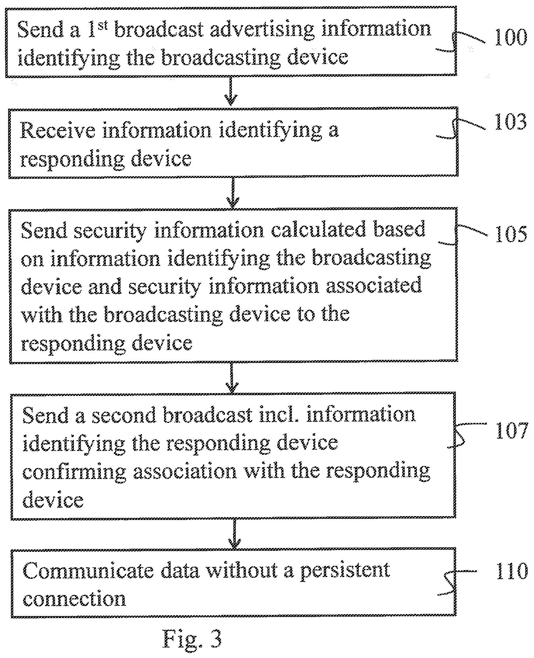

Figure 3 shows a procedure at the broadcasting device for enabling communication of data with the other device without pairing and a persistent connection. The broadcasting device sends at 100 a first broadcast for advertising information identifying the broadcasting device. It then receives at 103 from the other device information identifying the responding device. Security information calculated based on said information identifying the broadcasting device and security information associated with the broadcasting device is send at 105 to the responding device to associate the broadcasting device with the responding device. At 107 the broadcasting device sends a second broadcast including information identifying the responding device to confirm completion of the association with the responding device. At least one data packet can be communicated at 110 with the responding device subsequent to the second broadcast without establishing a persistent connection between the devices.

The auxiliary device can broadcast at 100 data based on which at least one key can be determined by a responding device and the device can be associated with at least one other device for close range communications without establishing a persistent dose range connection between the devices.

It shall be appreciated that if the operation of both interacting devices is considered on a system level, step 100 of Figure 3 would typically precede step 102 of Figure 2. Similarly, data can be received at step 110 of Figure 3 from the responding device after it has received the second broadcast in step 108 of Figure 2.

Also, it shall be appreciated that after the association data may be communicated at 110 in either direction. That is, after the association data can also be communicated from the broadcasting device to the responding device. For example, the broadcasting device can send data such as acknowledgements, reports, user inputs and so forth.

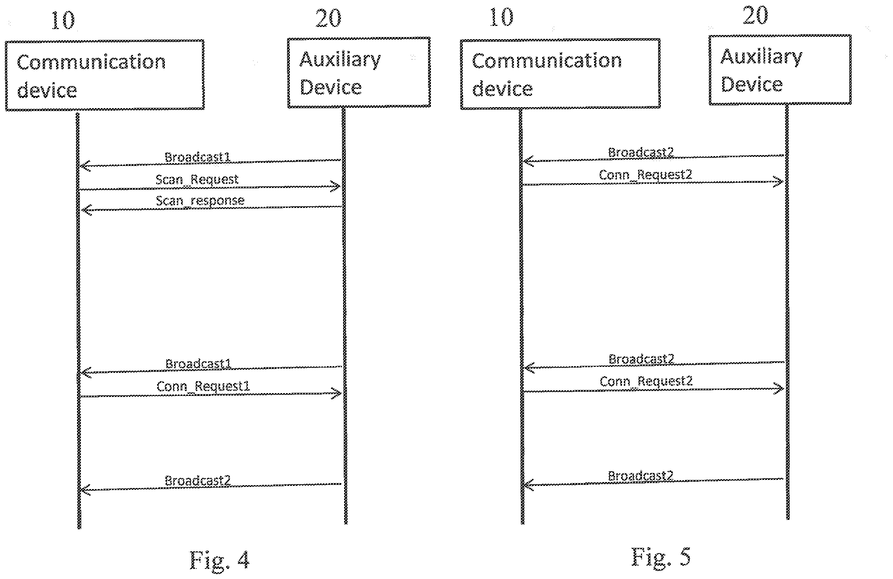

More detailed examples are described in the following with the reference to signalling flows shown in Figures 4 and 5. In Figure 4 a Bluetooth pairing procedure is replaced by a simpler procedure where the devices are associated without establishing a connection between them based on an association protocol. The association protocol enables a user to link devices in short range from each other to be ready for short range communications of data packets without the need to establish a link for pairing the devices as the case would be e.g. if the link is established based on the current Bluetooth pairing protocol.

In accordance with an example the procedure to provide a security association can be executed when a user has bought a new auxiliary device and switches on the device for the first time. For example, the user can switch on the device 20 of Figure 1 by pulling a tab which enables a battery thereof to be connected which in turn turns on the BLE radio. Another example is where a user presses a button on a watch or other auxiliary device to turn on the display which action also turns on the BLE radio. The auxiliary device 20 then broadcasts information, for example information about its identity, address and/or the type or make and model of the device.

The communication device 10 of the user receives the broadcast. At this stage the user may be given the option to select 'add a new device' on his smart phone or other communication device. Alternatively, the broadcasting device is added automatically in the list of devices stored in a memory of the communication device 20. The user can be provided with a message prompting him to download a specific application associated with the device or other information of credentials associated with the device and needed for the association and subsequent communications from an appropriate location. For example, an application can be provided by a server in a cloud computing system accessed based on the broadcast data. The user can then select to save device credentials in the phone.

The association protocol may thus be automatic or be initiated by the user. For example, the user can select 'add new device' in response to the phone receiving 'Broadcast1' message of Figure 4. This message can include identity (ID) information of the device sending the broadcast. For example, the device 20 can broadcast its Bluetooth address BD_ADDR_D. The device can perform the broadcasting in regular intervals, e.g. once a second.

If the device 10 is in a mode where it can receive the broadcast and linking thereof with the broadcasting device is desired, the device 10 can respond with a message including information of its identity. For example, the device 10 can respond the broadcast by sending its Bluetooth address BD_ADDR_P if the linking between the devices is desired. The user can be prompted to obtain further information of the device 20. The further information can be obtained by downloading a company specific application and/or information file. The downloaded information can include predefined security parameters(s) such as a key associated with the device. The information is saved in a record of associated devices in the communication device 10.

In the following examples the surety information comprises a key obtained from a company or other organisation associated with the device 20. In the particular illustrative example this key is referred to as Comp_Key.

In accordance with a possibility a manufacturer of certain devices can provide a common key for a certain group of devices, such as for a particular model or type. In the Figure 1 example, a manufacturer of the watch may have several different types and/or models of watches and specific applications and/or parameters categorised on the basis of the type and/or model.

Once the communication device 10 has received the Comp_key it can calculate a further key for use in communications between the communication device 10 and device 20. This further key is denoted in this example as P_Key, and is computed:

$$P\_Key = hash \ (BD\_ADDR\_D, \ BD\_ADDR\_P, \ Comp\_Key),$$

wherein BD_ADDR_D is a Bluetooth address of the device 20, BD_ADDR_P is a Bluetooth address of the communication device 10, and Comp_key is a key associated with the device 20.

The device 20 receives a scan request message from the communication device including address information of the communication device 10, for example the Bluetooth address BD_ADDR_P.

The device 20 can pre-calculate a verification key. This is D_Key = Hash (BD_ADDR_D, Comp_Key) in the example. The device 20 then sends the D_Key in a Scan_Response message to the communication device 20. The communication device 10 can also calculate a corresponding verification key for the device (e.g. the D_Key) and compare the received key and the calculated key. If the keys match, the communication device 10 calculates and sends a further key, or Conf_Key = Hash (BD_ADDR_P, P_Key) in a connection request message (Conn_request message in Figure 4). This key is calculated to avoid sending the encryption key (P_Key) as such to the other device 10.

Device 20 also calculates P_Key = Hash (BD_ADDR_D, BD_ADDR_P, Comp_Key) for use in decryption of data from the communication device 10. Device 20 can thus also calculate the further key based on this key. In this example device 20 can thus also compute the Conf_Key = Hash (BD_ADOR_P, P_Key). The device 20, after receiving the Conf_Key in Conn_request message, can compare the received and calculated Conf_Keys, and if there is a match, the device 20 determines the association successful and can use the P_Key for encryption. If there is no match then the device 20 can continue broadcasting of 'Broadcast1' packets.

In case of a match the device 20 can alert the user of the association. For example a sound, visual and/or vibrating signal can be given.

The device 20 is now ready to broadcast 'Broadcast2' packets. When the communication device 10 receives a 'Broadcast2' packet it can treat this as a confirmation of completion of the association procedure. The determination can be based on the change in the type of the broadcast packet or any other appropriate indication. If another 'Broadcast1' packet is received, device 10 can determine this to mean that the device 20 is attempting again to become an associated device and that the previous association attempt failed.

Figure 5 shows signalling after the security association procedure of Figure 4 is completed. After completion / reception of 'Broadcast2' message, the communication device 10 can communicate data. For the data communication the communication device can calculate Enc_data1 = AES(nounce1, Data1, P_Key), where 'Data1' is the data to be communicated and nounce can be a random number.

The device 20 sends 'Broadcast2' packet with BD_ADDR_P. The sending can be periodic, for example once every second according to the Bluetooth protocol. When the phone receives 'Broadcast2' packet with BD_ADDR_P it can send in response the calculated Enc_data1 and nounce1 in the shown 'Conn_Request2'.

The device 20 then receives Enc_Data1 and nounce1 in 'Conn_Request2'. Enc_Data1 is decrypted using P_Key and nounce1. Thus the device 20 can receive Data1 from the communication device 10 without a need for a persistent connection between the devices.

Figure 5 shows also possible further signalling for communication of further data after Data1. The communication device 10 calculates Enc_data2 = AES(nounce2, Data2 , P_Key). The device 20 keeps on sending 'Broadcast2' messages with BD_ADDR_P. Broadcasting of these packets can be periodic. When the communication device 10 receives 'Broadcast2' with BD_ADDR_P it can send Enc_data2 and nounce2 in a further Conn_Request2 message. The device 20 receives the Enc_Data2 and nounce2 in the Conn_Request2 message and decrypts Enc_Data1 using P_Key and nounce2.

This procedure can be repeated as many times as needed.

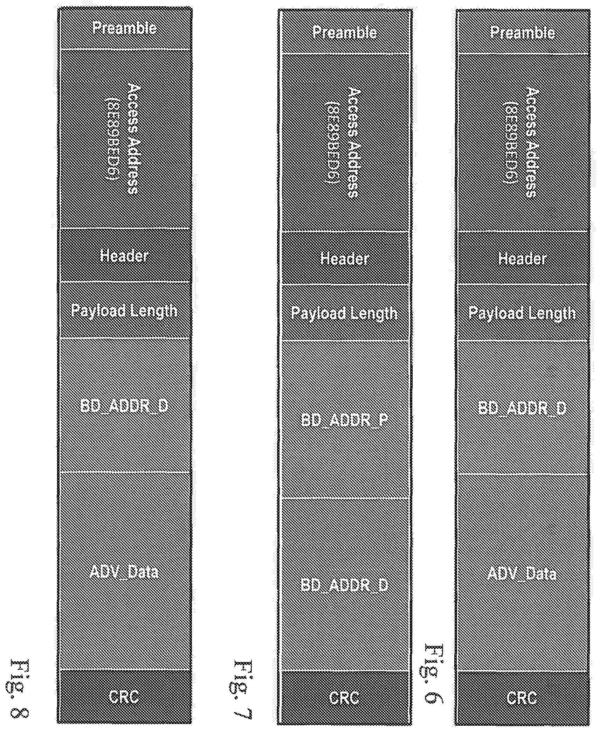

Figures 6 to 11 illustrate examples of various packet structures that can be used for implementing the above messages.

Figure 6 shows a packet a device like device 20 in Figure 1 can broadcast periodically to advertise itself for association. The packet can be broadcast for example once every 1s. The device address, in this example BD_ADDR_D, can be a random address. The random address can change periodically. For example, the address can change every 15mins. ADV_data field can contain information such as the uniform resource identifier (URI) and make and model of the device.

Figure 7 shows a packet a communication device, for example the phone of Figure 1, can send in response to the broadcast packet of Figure 6. The communication device can send a 'Scan_request' packet upon receiving a 'broadcast1' packet from the wearable device 20. BD__ADDR_P is the BD_ADDR of the phone and BD_ADDR_D is the BD_ADDR of the device.

The device can respond to the 'Scan_request' packet of Figure 7 with a 'Scan_response' packet of Figure 8. The device can be configured to include the pre-calculated D_Key = Hash (BD_ADDR_D, Comp_Key) in the ADV_data field of the scan response packet.

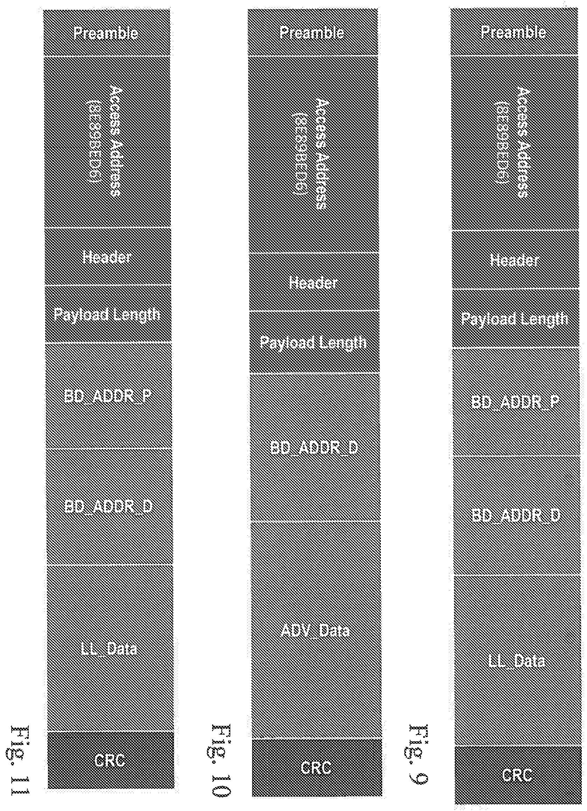

Figure 9 shows a 'Conn_request' packet send by the communication device upon receiving a 'broadcast1' packet from the device. Field 'LL_Data' contains a Conf_Key calculated by the communication device.

Packets for communication of data are shown in Figures 10 and 11. The broadcasting device, for example a wearable device, broadcasts the packet of Figure 10 periodically, for example every 1s. BD_ADDR_D is a random address which can change periodically, e.g. every 15 mins. Field 'ADV_data' contains the BD_ADDR_P. More than one address cam be included in this field, The communication device receiving the broadcast can then send 'Conn_request' packet according to Figure 11 upon receiving the broadcast packet of Figure 10 from the broadcasting device. In this packet the LL_Data field contains Enc_Data and nounce.

In the above examples the broadcasting device was provided by an auxiliary device, e.g. a wearable device, and the responding device was provided by a communication device, e.g. a mobile or smart phone. The arrangement can also work other way around, i.e. the auxiliary device can receive broadcasts from a communication device. In this scenario the auxiliary device does not need to constantly transmit anything but can simply listen to periodic transmissions by other devices. The auxiliary device can be switched off when not needed, e.g. when the main communication device is in use, for example in users hand. Switching can be controlled manually or automatically, e.g. based on time, location, or other triggering event. In this scenario power saving can be obtained at the auxiliary device.

In addition to the main device sending data to the auxiliary device data can be communicated in the other direction. For example, the auxiliary device can send acknowledgements or other data in response to receiving anything from the main device. Also, status information such as "battery low", "update required" and so forth and control commands can be communicated from the auxiliary device. The data can be send e.g. in Broadcats2 messages of Figure 5. To avoid sending anything when the associated device cannot receive, e.g. the short range radio thereof is off, the auxiliary device can be configured to transmit data only in response to receiving anything from an associated device.

The above describes communications between two devices. However, a device can be associated with more than one device and simultaneously communicate with more than one device. For example, the first broadcast by a broadcasting device can be received by more than one device and more than one device can then request for a scan and in response to confirmed association communicate data with the broadcasting device.

Once the association is completed the communication device 10 can go in a sleep mode as there is no need for constant communications to maintain a connection. The radio thereof can be switched off. Id data such as an alert message needs to be sent to the auxiliary device the radio can be switched on and a message including the data can be send to the auxiliary device. In the Figure 5 example this would take place by sending the Conn-Request2 message. Once this has been done the radio can be again switched off.

In accordance with a further example the main communication device can be configured for selective communication with the auxiliary device. For example, the auxiliary device can be used to provide alerts and/or show messages when the main communication device is out of sight/hand e.g. in a pocket. In such state the main device can transmit data to the auxiliary device to trigger the alerts, However, if the main device is already in use, e.g. out of pocket and possibly in the hand of the user, the alerts and messages would be provided anyway through the main device, and there might not be a need to send data to the auxiliary device. To avoid unnecessary communications of data the main device can be configured to send the data only when it is in a predefined state / not in use, for example in pocket. This can be determined e.g. based on the display status of the device. When the display screen is on it can be determined that the device is in use and when the display is off it can be determined that it is not in use / in pocket. Other possibilities include detection based on lighting sensors where brightness of light can be used to determine whether the phone is in hand of the user or at least out of pocket, handbag and so forth.

The above described examples may provide certain benefits. For example, need for a persistent connection between the devices can be removed by use of a data protocol that enables communications in a non-connected mode. The data protocol is secure. Certain embodiments also support privacy as a user cannot be associated with constant data that is transmitted by the wearable device. Data protocol can reduce power consumption in wearable device and/or in the main communication device. For example, if assuming total of one hundred messages to the wearable device during one day, a persistent connection with 1s connection interval would consume power for 86400 transactions during the day compared to one hundred scanning transactions. This can provide considerable power saving, even if allowing for scanning times that are longer than sending data in connected mode. Power saving on the wearable device is comparable between advertising and connection modes for one connection if all advertising channels are used. The power saving is even more when the wearable device is associated with two or more main communication devices.

Users may find it easier to control auxiliary devices through the more familiar and typically larger mobile device user interfaces. Also, user may not need to (repeatedly) go through the pairing procedure which some users may find confusing. Instead, a less complex association procedure where only a few messages needs to be exchanged and the devices can stay in non-connected modes can be provided.

It is noted that whilst embodiments have been described using a mobile communication device such as a smart phone and a wearable device such as a smart watch as examples, similar principles can be applied to any other user devices where short range communication between the devices is desired. Therefore, although certain embodiments were described above by way of example with reference to certain exemplifying mobile devices and technologies and uses thereof, the principles can be applied to any other suitable forms of devices, applications and services than those illustrated and described herein.

The required data processing apparatus, functions and circuitry at the relevant devices may be provided by means of one or more data processors and other hardware and software, The described functions may be provided by separate processors or by an integrated processor. The data processing apparatus may be of any type suitable to the local technical environment, and may include one or more of general purpose computers, special purpose computers, microprocessors, digital signal processors (DSPs), application specific integrated circuits (ASIC), gate level circuits and processors based on dual-core or multi-core processor architecture, as non-limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory, including appropriate types of random access memory (RAM) and read-only memory (ROM).

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, for example for controlling communications, user interface, and data processing, general purpose hardware or controller or other computing devices, or some combination thereof. The software may be stored on such physical media as memory chips, or memory blocks implemented within the processor, magnetic media such as hard disk or floppy disks, and optical media such as for example DVD and the data variants thereof, CD, and a cloud storage arrangement.

As used in this specification, the term circuitry or the like refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that requires software or firmware for operation, even if the software or firmware is not physically present. This definition of circuitry applies to all uses of this term in this specification, including in any claims. As a further example, as used in this specification, the term circuitry also covers an implementation of merely a processor (or multiple processors) or portion of a processor and its (or their) accompanying software and/or firmware. The term circuitry also covers, for example and if applicable to the particular claim element, a baseband integrated circuit or applications processor integrated circuit for a mobile device.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within scope of this invention as defined in the appended claims. Indeed there is a further embodiment comprising a combination of one or more of any of the other embodiments previously discussed.

**Claims**

1. A method for a device, comprising
   receiving a first broadcast from a broadcasting device, the first broadcast advertising information identifying the broadcasting device, sending information identifying the device, obtaining security information associated with the broadcasting device received from the broadcast device, authenticating the broadcasting device based on the security information,
receiving a second broadcast from the broadcasting device to confirm completion of the association with the device,
determining on the basis of the second broadcast that the broadcasting device is an associated device capable of non-connected communications between the devices, and
communicating at least one data packet with the broadcasting device subsequent to the second broadcast without establishing a persistent connection between the devices.

2.  A method comprising
sending by a broadcasting device a first broadcast for advertising information identifying the broadcasting device,
receiving from a responding device information identifying the responding device,
sending security information calculated based on said information identifying the broadcasting device and security information associated with the broadcasting device to associate the broadcasting device with the responding device,
sending by the broadcasting device a second broadcast including said information identifying the responding device to confirm completion of the association with the responding device, and
communicating at least one data packet with the responding device subsequent to the second broadcast without establishing a persistent connection between the devices.

3.  A method as claimed in claim 1 or 2, wherein the first broadcast comprises information of at least one of an address, universal resource identifier and the model and/or type of the broadcasting device.

4.  A method as claimed in any preceding claim, comprising encrypting data based on at least one key computed based on said security information associated with the broadcasting device.

5.  A method as claimed in any preceding claim, wherein the communicating of at least one data packet comprises communicating data to the broadcasting device in a connection request packet and/or communicating data from the broadcasting device in a further broadcast packet.

6.  A method as claimed in any preceding claim, wherein the security information associated with the broadcasting device comprises at least one key.

7.  A method as claimed in any preceding claim, wherein the security information associated with the broadcasting device is obtained by the device by downloading the security information from a server based on the first broadcast and/or by the broadcasting device by fetching from an internal storage of the broadcasting device.

8.  A method as claimed in claim 1 or any claim dependent on claim 1, comprising:

    sending information identifying the device to the broadcasting device in response to the first broadcast,
    calculating a first key based on the obtained security information and information identifying the broadcasting device, the obtained security information comprising a second key available also for the broadcasting device,
    receiving a third key from the broadcasting device,
    in response to determining a match between the first key and the third key, calculating a fourth key based on the addresses of the device and the broadcasting device and the second key,
    calculating a fifth key based on the fourth key and the address of the device,
    sending the fifth key to the broadcasting device in a request for connection,
    determining a successful security association based on receipt of the second broadcast from the broadcasting device, and
    sending, data encrypt based on the fourth key, to the broadcasting device.

9.  A method as claimed in claim 2 or any claim dependent on claim 2, comprising:

    calculating a first key based on a second key available for the broadcasting device and information identifying the broadcasting device,
    sending the first key to the responding device,
    calculating a third key based on the addresses of the responding and broadcasting devices and the second key,
    receiving a fourth key from the responding device,
    calculating a fifth key based on the third key and the address of the responding device,
    comparing the fourth and the fifth key, and when there is a match, determining a successful security association and sending the second broadcast, and

receiving data encrypt based on the third key from the responding device.

10. A method as claimed in any preceding claim, wherein the first broadcast and/or the second broadcast are periodic.

11. A method as claimed in any preceding claim, comprising changing address information for at least one of the devices periodically and/or randomly.

12. A method as claimed in any preceding claim, comprising switching short range radio apparatus of at least one of the devices between on/off states based on predefined criteria.

13. An apparatus comprising means for performing the method according to any of claims 1-12.

14. A computer program which, when executed, causes the method of at least one of claims 1 to 12 to be performed.

**Patentansprüche**

1. Verfahren für eine Vorrichtung, das Folgendes umfasst:

   Empfangen eines ersten Rundrufs von einer Rundsendevorrichtung, wobei der erste Rundruf Informationen anzeigt, die die Rundsendevorrichtung identifizieren,
   Senden von Informationen, die die Vorrichtung identifizieren,
   Erhalten von Sicherheitsinformationen, die der Rundsendevorrichtung zugeordnet sind und von der Rundsendevorrichtung empfangen werden,
   Authentifizieren der Rundsendevorrichtung auf der Grundlage der Sicherheitsinformationen,
   Empfangen eines zweiten Rundrufs von der Rundsendevorrichtung, um den Abschluss der Zuordnung zur Vorrichtung zu bestätigen,
   Bestimmen auf der Grundlage des zweiten Rundrufs, dass die Rundsendevorrichtung eine zugeordnete Vorrichtung ist, die für unverbundene Kommunikationen zwischen den Vorrichtungen geeignet ist, und
   Kommunizieren mindestens eines Datenpaktes mit der Rundsendevorrichtung auf den zweiten Rundruf folgend, ohne eine fortdauernde Verbindung zwischen den Vorrichtungen aufzubauen.

2. Verfahren, das Folgendes umfasst:

   Senden durch eine Rundsendevorrichtung eines ersten Rundrufs, um Informationen anzuzeigen, die die Rundsendevorrichtung identifizieren,
   Empfangen von einer antwortenden Vorrichtung von Informationen, die die antwortende Vorrichtung identifizieren,
   Senden von Sicherheitsinformationen, die auf der Grundlage der Informationen, die die Rundsendevorrichtung identifizieren, und von Sicherheitsinformationen, die der Rundsendevorrichtung zugeordnet sind, berechnet wurden, um die Rundsendevorrichtung der antwortenden Vorrichtung zuzuordnen,
   Senden durch die Rundsendevorrichtung eines zweiten Rundrufs, die die Informationen, die die antwortende Vorrichtung identifizieren, enthält, um den Abschluss der Zuordnung zur antwortenden Vorrichtung zu bestätigen, und
   Kommunizieren mindestens eines Datenpaktes mit der antwortenden Vorrichtung auf den zweiten Rundruf folgend, ohne eine fortdauernde Verbindung zwischen den Vorrichtungen aufzubauen.

3. Verfahren nach Anspruch 1 oder 2, wobei der erste Rundruf Informationen einer Adresse und/oder einer universellen Betriebsmittelkennung und/oder des Modells und/oder des Typs der Rundsendevorrichtung umfasst.

4. Verfahren nach einem vorhergehenden Anspruch, das ein Verschlüsseln von Daten auf der Grundlage mindestens eines Schlüssels, der auf der Grundlage der Sicherheitsinformationen, die der Übertagungsvorrichtung zugeordnet sind, berechnet wurde, umfasst.

5. Verfahren nach einem vorhergehenden Anspruch, wobei das Kommunizieren mindestens eines Datenpakets ein Kommunizieren von Daten zur Rundsendevorrichtung in einem Verbindungsanforderungspaket und/oder ein Kommunizieren von Daten von der Rundsendevorrichtung in einem weiteren Rundrufpaket umfasst.

6. Verfahren nach einem vorhergehenden Anspruch, wobei die Sicherheitsinformationen, die der Rundsendevorrichtung zugeordnet sind, mindestens einen Schlüssel umfassen.

7. Verfahren nach einem vorhergehenden Anspruch, wobei die Sicherheitsinformationen, die der Rundsendevorrichtung zugeordnet sind, durch die Vorrichtung durch Herunterladen der Sicherheitsinformationen auf der Grundlage des ersten Rundrufs von einem Server und/oder durch die Rundsendevorrichtung durch Abrufen aus einem internen Speicher der Rundsendevorrichtung erhalten werden.

8. Verfahren nach Anspruch 1 oder einem Anspruch, der von Anspruch 1 abhängt, das Folgendes umfasst:

Senden von Informationen, die die Vorrichtung identifizieren, zur Rundsendevorrichtung in Antwort auf den ersten Rundruf,
Berechnen eines ersten Schlüssels auf der Grundlage der erhaltenen Sicherheitsinformationen und von Informationen, die die Rundsendevorrichtung identifizieren, wobei die erhaltenen Sicherheitsinformationen einen zweiten Schlüssel umfassen, der auch für die Rundsendevorrichtung verfügbar ist,
Empfangen eines dritten Schlüssels von der Rundsendevorrichtung,
in Antwort auf das Bestimmen einer Übereinstimmung zwischen dem ersten Schlüssel und dem dritten Schlüssel Berechnen eines vierten Schlüssels auf der Grundlage der Adressen der Vorrichtung und der Rundsendevorrichtung und des zweiten Schlüssels,
Berechnen eines fünften Schlüssels auf der Grundlage des vierten Schlüssels und der Adresse der Vorrichtung,
Senden des fünften Schlüssels zur Rundsendevorrichtung in einer Anforderung einer Verbindung,
Bestimmen einer erfolgreichen Sicherheitszuordnung auf der Grundlage des Empfangs des zweiten Rundrufs von der Rundsendevorrichtung und
Senden von auf der Grundlage des vierten Schlüssels verschlüsselten Daten zur Rundsendevorrichtung.

9. Verfahren nach Anspruch 2 oder einem Anspruch, der von Anspruch 2 abhängt, das Folgendes umfasst:

Berechnen eines ersten Schlüssels auf der Grundlage eines zweiten Schlüssel, der für die Rundsendevorrichtung verfügbar ist, und von Informationen, die die Rundsendevorrichtung identifizieren,
Senden des ersten Schlüssels zur antwortenden Vorrichtung,
Berechnen eines dritten Schlüssels auf der Grundlage der Adressen der antwortenden Vorrichtung und der Rundsendevorrichtung und des zweiten Schlüssels,
Empfangen eines vierten Schlüssels von der antwortenden Vorrichtung,
Berechnen eines fünften Schlüssels auf der Grundlage des dritten Schlüssels und der Adresse der antwortenden Vorrichtung,
Vergleichen des vierten und des fünften Schlüssels und dann, wenn eine Übereinstimmung vorliegt, Festsetzen einer erfolgreichen Sicherheitszuordnung und Senden des zweiten Rundrufs und
Empfangen von auf der Grundlage des dritten Schlüssels verschlüsselten Daten von der antwortenden Vorrichtung.

10. Verfahren nach einem vorhergehenden Anspruch, wobei der erste Rundruf und/oder der zweite Rundruf wiederkehrend sind.

11. Verfahren nach einem vorhergehenden Anspruch, das ein wiederkehrendes und/oder regelloses Ändern von Adressinformationen für mindestens eine Vorrichtung umfasst.

12. Verfahren nach einem vorhergehenden Anspruch, das ein Schalten einer Kurzstreckenfunkvorrichtung mindestens einer Vorrichtung zwischen Ein-/Auszuständen auf der Grundlage vordefinierten Kriterien umfasst.

13. Vorrichtung, die Mittel zum Durchführen des Verfahrens nach einem der Ansprüche 1-12 umfasst.

14. Computerprogramm, das, wenn es ausgeführt wird, bewirkt, dass das Verfahren nach einem der Ansprüche 1-12 durchgeführt wird.

**Revendications**

1. Procédé pour un dispositif, comprenant :

la réception d'une première diffusion depuis un dispositif de diffusion, la première diffusion annonçant des informations identifiant le dispositif de diffusion,

l'envoi d'informations identifiant le dispositif,

l'obtention d'informations de sécurité associées au dispositif de diffusion reçues depuis le dispositif de diffusion,

l'authentification du dispositif de diffusion sur la base des informations de sécurité,

la réception d'une deuxième diffusion depuis le dispositif de diffusion pour confirmer l'achèvement de l'association avec le dispositif,

la détermination, sur la base de la deuxième diffusion, que le dispositif de diffusion est un dispositif associé capable de communications non connectées entre les dispositifs, et

la communication d'au moins un paquet de données avec le dispositif de diffusion à la suite de la deuxième diffusion sans établissement d'une connexion persistante entre les dispositifs.

2. Procédé, comprenant :

l'envoi, par un dispositif de diffusion, d'une première diffusion pour l'annonce d'informations identifiant le dispositif de diffusion,

la réception, depuis un dispositif répondeur, d'informations identifiant le dispositif répondeur,

l'envoi d'informations de sécurité calculées sur la base desdites informations identifiant le dispositif de diffusion et d'informations de sécurité associées au dispositif de diffusion pour associer le dispositif de diffusion au dispositif répondeur,

l'envoi, par le dispositif de diffusion, d'une deuxième diffusion comportant lesdites informations identifiant le dispositif répondeur pour confirmer l'achèvement de l'association avec le dispositif répondeur, et

la communication d'au moins un paquet de données avec le dispositif répondeur à la suite de la deuxième diffusion sans établissement d'une connexion persistante entre les dispositifs.

3. Procédé selon la revendication 1 ou 2, dans lequel la première diffusion comprend des informations relatives à au moins un élément dans le groupe constitué par une adresse, un identifiant universel de ressource et le modèle et/ou le type du dispositif de diffusion.

4. Procédé selon l'une quelconque des revendications précédentes, comprenant le chiffrement de données sur la base d'au moins une clé calculée sur la base desdites informations de sécurité associées au dispositif de diffusion.

5. Procédé selon l'une quelconque des revendications précédentes, dans lequel la communication d'au moins un paquet de données comprend la communication de données au dispositif de diffusion dans un paquet de requête de connexion et/ou la communication de données depuis le dispositif de diffusion dans un paquet de diffusion supplémentaire.

6. Procédé selon l'une quelconque des revendications précédentes, dans lequel les informations de sécurité associées au dispositif de diffusion comprennent au moins une clé.

7. Procédé selon l'une quelconque des revendications précédentes, dans lequel les informations de sécurité associées au dispositif de diffusion sont obtenues par le dispositif par téléchargement des informations de sécurité depuis un serveur sur la base de la première diffusion et/ou par le dispositif de diffusion par extraction à partir d'une unité de stockage interne du dispositif de diffusion.

8. Procédé selon la revendication 1 ou une quelconque revendication qui dépend de la revendication 1, comprenant :

l'envoi d'informations identifiant le dispositif au dispositif de diffusion en réponse à la première diffusion,

le calcul d'une première clé sur la base des informations de sécurité obtenues et d'informations identifiant le dispositif de diffusion, les informations de sécurité obtenues comprenant une deuxième clé également disponible pour le dispositif de diffusion,

la réception d'une troisième clé depuis le dispositif de diffusion,

en réponse à la détermination d'une concordance entre la première clé et la troisième clé, le calcul d'une quatrième clé sur la base des adresses du dispositif et du dispositif de diffusion et de la deuxième clé,

le calcul d'une cinquième clé sur la base de la quatrième clé et de l'adresse du dispositif,

l'envoi de la cinquième clé au dispositif de diffusion dans une requête de connexion,

la détermination d'une association de sécurité réussie sur la base de la réception de la deuxième diffusion depuis le dispositif de diffusion, et

l'envoi de données chiffrées sur la base de la quatrième clé au dispositif de diffusion.

9. Procédé selon la revendication 2 ou une quelconque revendication qui dépend de la revendication 2, comprenant :

le calcul d'une première clé sur la base d'une deuxième clé disponible pour le dispositif de diffusion et d'informations identifiant le dispositif de diffusion,
l'envoi de la première clé au dispositif répondeur,
le calcul d'une troisième clé sur la base des adresses des dispositifs répondeur et de diffusion et de la deuxième clé,
la réception d'une quatrième clé depuis le dispositif répondeur,
le calcul d'une cinquième clé sur la base de la troisième clé et de l'adresse du dispositif répondeur,
la comparaison de la quatrième et de la cinquième clé et, en cas de concordance, la détermination d'une association de sécurité réussie et l'envoi de la deuxième diffusion, et
la réception de données chiffrées sur la base de la troisième clé depuis la dispositif répondeur.

10. Procédé selon l'une quelconque des revendications précédentes, dans lequel la première diffusion et/ou la deuxième diffusion sont périodiques.

11. Procédé selon l'une quelconque des revendications précédentes, comprenant la modification périodique et/ou aléatoire d'informations d'adresse pour au moins un des dispositifs.

12. Procédé selon l'une quelconque des revendications précédentes, comprenant la commutation entre des états de marche/arrêt d'un appareil radio de courte portée d'au moins un des dispositifs sur la base de critères prédéfinis.

13. Appareil comprenant des moyens de mise en œuvre du procédé selon l'une quelconque des revendications 1 à 12.

14. Programme d'ordinateur qui, lorsqu'il est exécuté, entraîne la mise en œuvre du procédé selon au moins une des revendications 1 à 12.

Fig. 1

EP 3 192 290 B1

Receive 1st broadcast from a broadcasting device — 102

Obtain based on the 1st broadcast security information associated with the broadcasting device — 104

Authenticate the broadcasting device based on the security information — 106

Receive a 2nd broadcast from the broadcasting device — 108

Determine the broadcasting device as an associated device — 109

Communicate data without a persistent connection — 110

Fig. 2

Send a 1<sup>st</sup> broadcast advertising information identifying the broadcasting device — 100

Receive information identifying a responding device — 103

Send security information calculated based on information identifying the broadcasting device and security information associated with the broadcasting device to the responding device — 105

Send a second broadcast incl. information identifying the responding device confirming association with the responding device — 107

Communicate data without a persistent connection — 110

Fig. 3

EP 3 192 290 B1

Fig. 4                                Fig. 5

| Preamble |
|---|
| Access Address (8E89BED6) |
| Header |
| Payload Length |
| BD_ADDR_D |
| ADV_Data |
| CRC |

Fig. 8

| Preamble |
|---|
| Access Address (8E89BED6) |
| Header |
| Payload Length |
| BD_ADDR_P |
| BD_ADDR_D |
| CRC |

Fig. 7

| Preamble |
|---|
| Access Address (8E89BED6) |
| Header |
| Payload Length |
| BD_ADDR_D |
| ADV_Data |
| CRC |

Fig. 6

Fig. 11

| Preamble |
| Access Address (8E89BED6) |
| Header |
| Payload Length |
| BD_ADDR_P |
| BD_ADDR_D |
| LL_Data |
| CRC |

Fig. 10

| Preamble |
| Access Address (8E89BED6) |
| Header |
| Payload Length |
| BD_ADDR_D |
| ADV_Data |
| CRC |

Fig. 9

| Preamble |
| Access Address (8E89BED6) |
| Header |
| Payload Length |
| BD_ADDR_P |
| BD_ADDR_D |
| LL_Data |
| CRC |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013174252 A1

- US 2014055243 A1